Europäisches Patentamt

European Patent Office

Office européen des brevets

(11) Numéro de publication : **0 322 273 B1**

(12) **FASCICULE DE BREVET EUROPEEN**

(45) Date de publication du fascicule du brevet :
**04.03.92 Bulletin 92/10**

(21) Numéro de dépôt : **88403149.3**

(22) Date de dépôt : **12.12.88**

(51) Int. Cl.⁵ : **B32B 17/10,** C03C 27/12,
**E06B 5/16,** C09K 21/00

(54) **Vitrage antifeu et procédé de fabrication.**

(30) Priorité : **15.12.87 FR 8717467**

(43) Date de publication de la demande :
**28.06.89 Bulletin 89/26**

(45) Mention de la délivrance du brevet :
**04.03.92 Bulletin 92/10**

(84) Etats contractants désignés :
**AT BE CH DE ES FR GB IT LI LU NL SE**

(56) Documents cités :
**EP-A- 0 192 249**
**GB-A- 2 029 837**
**GB-A- 2 085 899**
**PATENT ABSTRACTS OF JAPAN, vol. 4, no. 85
(C-15)[567], 18 juin 1980, page 17 C 15; &
JP-A-55 48 227 (TAKASHI ISHIKAWA) 05-
04-1980**

(73) Titulaire : **SAINT-GOBAIN VITRAGE
INTERNATIONAL
18, avenue d'Alsace
F-92400 Courbevoie (FR)**
(84) **BE CH ES FR GB IT LI LU NL SE AT**

Titulaire : **VEGLA Vereinigte Glaswerke GmbH
Viktoriaallee 3-5
W-5100 Aachen (DE)**
(84) **DE**

(72) Inventeur : **Holzer, Gerhard
Dr. Josef-Lamby-Strasse 2
W-5100 Aachen (DE)**
Inventeur : **Gelderie, Udo
An der Waldmeisterhütte 34
W-5190 Stolberg (DE)**

(74) Mandataire : **de Toytot, Robert et al
SAINT-GOBAIN RECHERCHE 39 quai Lucien
Lefranc B.P. 135
F-93304 Aubervilliers Cédex (FR)**

## Description

L'invention concerne un vitrage antifeu comportant au moins deux feuilles de verre maintenues à distance l'une de l'autre et entre lesquelles est placée une couche d'un gel aqueux dont la phase aqueuse comporte au moins un sel en solution et dont la phase gélifiante solide est constituée d'un polymère.

Des vitrages antifeu de ce type sont connus par le brevet français FR 2 346 548. Au cours d'un incendie, ils fonctionnent de la manière suivante : la chaleur est tout d'abord absorbée par l'eau du gel aqueux. Cette chaleur sert à vaporiser l'eau. Ensuite, après vaporisation de l'eau et combustion de la phase organique solide, le sel constitue une croûte solide mousseuse. Cette croûte solide mousseuse subsiste, même en présence d'une très forte chaleur et constitue un bouclier contre l'échauffement, celui-ci empêche par ailleurs la pénétration des rayons calorifiques. Selon ces principes de base, on réalise des vitrages antifeu qui sont pareflamme (classe G de la norme DIN 4102, 5ème partie de septembre 1977) ou coupe-feu pendant 90 minutes (classe de résistance au feu F 90 selon la DIN).

Dans les vitrages antifeu connus évoqués plus haut, le polymère constitutif de la phase solide gélifiante est un dérivé réticulé de l'acide polyacrylique, par exemple l'amide de l'acide polyacrylique.

Lors de la fabrication de vitrages antifeu à gel basés sur un gélifiant constitué de dérivés de l'acide acrylique, on utilise des monomères de cet acide acrylique qui, à cause de leur caractère toxique, présentent des inconvénients.

L'invention se donne comme mission de trouver comme constituant du gel, un système chimique qui remplisse toutes les exigences prévues pour un vitrage antifeu de ce type telles que, par exemple, transparence et absence de turbidité de la couche de gel, haute solubilité du sel, et solubilité complète du composé gélifiant dans l'eau où le sel est dissous, mais dans lequel cependant, aucune substance toxique ou dangereuse pour la santé n'est utilisée.

Selon l'invention, cette mission sera accomplie par l'utilisation comme polymère constitutif de la phase solide gélifiante, d'un alcool polyvinylique réticulé.

On a prouvé que les vitrages antifeu du type décrit ci-dessus, à base d'alcool polyvinylique réticulé en tant que phase solide, remplissent toutes les exigences imposées au produit. En particulier, les vitrages, même avec une épaisseur de gel importante, demeurent hautement transparents, clairs et incolores. On a prouvé également que ces caractéristiques n'évoluaient pas au cours du temps dans les conditions d'usage habituelles. En particulier, les gels selon l'invention sont stables jusqu'à des températures de 50°C et plus et également insensibles au froid jusqu'à - 30°C. Le comportement au feu correspond à celui des vitrages à gel habituels. Les éléments constitutifs de la solution gélifiables sont parfaitement inoffensifs pour la santé. De plus, à la différence des systèmes gélifiant connus, le vitrage antifeu selon l'invention ne comporte aucun composé oxydant puissant tel que ceux nécessaires à la polymérisation des dérivés de l'acide acrylique, de telle sorte que les risques de corrosion du cadre métallique périphérique sont sensiblement diminués.

Les vitrages conformes à l'invention peuvent être fabriqués à partir de différents produits de base. De préférence on utilise pour la phase solide du gel, des produits de base consistant en alcool polyvinylique avec une masse molaire moyenne comprise entre 18 000 et 224 000 grammes/mole et un taux d'hydrolyse de 75 à 100 moles pour-cent. Les alcools polyvinyliques de ce type sont solubles dans l'eau. Néanmoins, plus le taux d'hydrolyse croît plus la température à laquelle on effectue la dissolution doit être élevée. Par exemple, des alcools polyvinyliques avec un taux d'hydrolyse de 98 à 100 moles pour-cent nécessitent pendant la dissolution des températures supérieures à 90°C.

On peut provoquer la réticulation des alcools polyvinyliques de la solution gélifiable par l'ajout de différentes matières à la solution. C'est ainsi par exemple que les aldéhydes bifonctionnels conviennent pour la réaction de réticulation. C'est le cas, en particulier, du glutardialdéhyde, du téréphtaldialdéhyde et du glyoxal. Une exigence commune à tous ces composés est évidemment leur solubilité dans l'eau et même dans la solution comportant le sel et l'alcool polyvinylique.

La concentration de l'alcool polyvinylique et des composés à base d'aldéhyde doivent être choisis de sorte que, d'une part, le gel obtenu possède les propriétés souhaitées telles que dureté, consistance, turbidité, et retrait de polymérisation et que d'autre part, la réticulation ne se produise pas trop rapidement de sorte que l'on dispose de suffisamment de temps pour la fabrication et la mise en oeuvre de la solution gélifiable. Une dernière condition qui concerne les concentrations doit être remplie, il s'agit de celle concernant la viscosité, elle doit être suffisamment basse pour que la solution puisse remplir de manière satisfaisante les parties creuses des vitrages multiples.

Pour respecter les points de vue précédents, la concentration de l'alcool polyvinylique dans la solution aqueuse doit être choisie de telle manière qu'avec un alcool polyvinylique de masse molaire moyenne d'environ 18 000 grammes/mole elle ne dépasse pas 40 % en poids. Pour une masse molaire moyenne de 224 000 grammes/mole on se limitera à un maximum de 10 % en poids.

En ce qui concerne le rapport des quantités d'aldéhyde et d'alcool polyvinylique, on a également déterminé des domaines préférés. Alors que théoriquement des rapports molaires entre l'alcool polyvinylique et le dialdéhyde de 1/1 à 1/1 000 sont possibles on a trouvé que pour des rapports supérieurs à 1/100 les gels obtenus avaient tendance à provoquer une certaine turbidité et un certain retrait trop importants. Dans la pratique, dans le cas où l'on utilise le glutardialdéhyde des rapports molaires entre l'alcool polyvinylique et le dialdéhyde de 1/1 à 1/10 se sont avérés satisfaisants, et dans le cas d'utilisation de téréphtaldialdéhyde, ceux-ci sont de 1/1 à 1/100.

La réaction de réticulation peut être obtenue de manière satisfaisante à condition que la valeur du pH soit comprise entre 2,5 et 5. Cela peut être obtenu en ajoutant au système des quantités adéquates d'un acide compatible avec la solution ou même en ajoutant un sel acide compatible. Il serait possible d'obtenir la réaction de réticulation même sans utiliser d'acide provoquant la catalyse, néanmoins l'utilisation d'une valeur de pH adaptée permet de réduire sensiblement le temps de réaction.

De même, la nature et la quantité du sel chargé d'assurer l'essentiel de la fonction antifeu du vitrage doivent être choisies en fonction de leur compatibilité avec le reste du système chimique. On a ainsi constaté que le chlorure de calcium et le chlorure de magnésium sont particulièrement bien adaptés alors que, par exemple, le chlorure de sodium est difficilement compatible avec la solution. Les sels de polyacides comme par exemple $Na_2SO_4$ se sont avérés incompatibles avec les alcools polyvinyliques.

La fabrication de la solution gélifiable se déroule en principe de la manière suivante : on commence par dissoudre l'alcool polyvinylique qui est introduit dans l'eau sous forme de poudre ou de granulés à la concentration voulue. La dissolution se produit à une température élevée de l'ordre de 90°C sous une agitation permanente. Après environ 40 minutes, l'alcool polyvinylique est complètement dissous. On ajoute alors à la solution le sel en quantité convenable et on continue d'agiter jusqu'à dissolution complète. Une autre méthode consiste à commencer par dissoudre le sel dans l'eau ou même à dissoudre simultanément sel et alcool polyvinylique. Toutes ces dissolutions se produisent à températures élevées et avec agitation permanente. Enfin, juste avant le remplissage de l'espace du vitrage multiple avec la solution gélifiable on introduit le dialdéhyde ainsi que l'acide catalyseur en quantités convenables dans celle-ci. Après avoir procédé à une homogénéisation soigneuse de la solution ainsi préparée on l'introduit dans l'espace compris entre les feuilles de verre. Les vitrages ainsi remplis sont alors soumis à une température de 50 à 70°C à laquelle le mélange polymérise en des temps qui dépendent de la composition et sont compris entre 2 et 15 heures.

Dans ce qui suit on présente plusieurs exemples de fabrication de solutions gélifiables. On donne également les conditions de prise du gel :

Exemple 1

Sans cesser d'agiter la solution on dissout 8 750 grammes d'alcool polyvinylique avec une masse molaire moyenne de 84 000 grammes/mole et un taux d'hydrolyse de 88 moles pour-cent dans une solution comprenant 5 350 grammes de $MgCl_2 \cdot 6 H_2O$ dans 8 800 grammes d'eau à 80°C. A la solution d'alcool polyvinylique ainsi obtenue on ajoute 2 000 grammes d'une solution de glyoxal à 30 % en poids ce qui correspond à un rapport molaire entre l'alcool polyvinylique et le glyoxal de 1 à 100. On ajoute alors à cette solution de 35 % en poids d'alcool polyvinylique avec une concentration de 10 % de $MgCl_2$, goutte à goutte une solution aqueuse à 10 % en poids d'acide chlorhydrique jusqu'à ce que le pH atteigne la valeur de 2,8. Après une homogénéisation suffisante on introduit la solution dans l'espace compris entre les feuilles d'un vitrage isolant. La gélification se termine à une température de 50°C en l'espace de deux heures.

Exemple 2

On dissout 750 grammes d'alcool polyvinylique avec une masse molaire moyenne de 127 000 grammes/mole et un taux d'hydrolyse de 88 moles pour-cent dans une solution aqueuse constituée de 4 250 grammes de $CaCl_2$ dans 20 000 grammes d'eau à une température de 90°C en agitant constamment. A cette solution d'alcool polyvinylique à 3 % pondéraux et de sel on ajoute 23,5 grammes d'une solution aqueuse de glutardialdéhyde à 25 % pondéraux. Ceci correspond à un rapport molaire alcool polyvinylique/glutardialdéhyde de 1 à 10. Après homogénéisation complète de la solution on constate, à cause de l'hydrolyse du chlorure de calcium une valeur du pH de 3,8. De même que dans l'exemple 1, on introduit la solution ainsi préparée dans l'espace d'un vitrage isolant. La gélification se produit en 5 heures à 50°C.

Exemple 3

On dissout 1 250 grammes d'alcool polyvinylique avec une masse molaire moyenne de 224 000 grammes par mole et un taux d'hydrolyse de 100 moles pour-cent dans 18 400 grammes d'eau à une température de 95°C en agitant constamment. A cette solution on ajoute 5 350 grammes de $MgCl_2.6H_2O$ puis on agite le mélange à une température de 90°C jusqu'à dissolution complète du sel. A cette solution à 5 % pondéraux d'alcool polyvinylique qui comprend 10 % pondéraux de $MgCl_2$ on ajoute 22,3 g d'une solution à 25 % en poids de glutardialdéhyde. On obtient ainsi un rapport molaire entre l'alcool polyvinylique et le glutardialdéhyde de 1 à 10. Par suite de l'hydrolyse du sel en solution il s'établit une valeur de pH de 3,9. Les vitrages remplis comme dans les exemples 1 et 2 gélifient à une température de 50°C en 5 heures.

## Exemple 4

On commence par dissoudre 1 850 grammes d'alcool polyvinylique avec une masse molaire moyenne de 127 000 grammes par mole et un taux d'hydrolyse de 88 moles pour-cent dans 18 600 grammes d'eau à une température de 90°C en agitant constamment. En continuant d'agiter la solution, on y ajoute 4 500 grammes de $CaCl_2$. On obtient ainsi une solution avec une composition pondérale de 7,5 % d'alcool polyvinylique et 18 % de $CaCl_2$. On lui ajoute 19,7 grammes de téréphtaldialdéhyde. On obtient ainsi un rapport molaire entre l'alcool polyvinylique et le téréphtaldialdéhyde de 1 à 10. Par suite de l'hydrolyse du sel en solution on obtient un pH d'environ 3,8. Les vitrages remplis de la même manière que dans les exemples précédents gélifient en l'espace de 3 heures à une température de 70°C. Cette température est nécessitée par la faible solubilité du téréphtaldialdéhyde aux basses températures.

## Exemple 5

En agitant constamment, on dissout 10 000 grammes d'alcool polyvinylique avec une masse molaire moyenne de 18 000 grammes par mole et un taux d'hydrolyse de 79 moles pour-cent dans 12 200 grammes d'eau à une température de 90°C. A la solution ainsi préparée, on ajoute 1 250 grammes de $CaCl_2$ et 1 560 grammes d'une solution à 25 % de glutardialdéhyde. On continue d'agiter jusqu'à homogénéisation complète. Par suite de l'hydrolyse du sel, cette solution à 40 % en poids d'alcool polyvinylique et 5 % de sel, atteint un pH de 4,5. Le rapport molaire alccool polyvinylique/glutardialdéhyde est ici de 1 à 7. Cette solution sert à remplir l'espace d'un double vitrage et le système gélifie en l'espace de 15 heures à 50°.

## Exemple 6

On dissout 1 250 grammes d'alcool polyvinylique avec une masse molaire de 202 000 grammes/mole et un taux d'hydrolyse de 98 moles pour-cent ainsi que 10 750 grammes de $MgCl_2.6H_2O$ dans 13 000 grammes d'eau à une température de 95°C en agitant constamment. On ajoute à la solution ainsi préparée 25 grammes d'une solution à 25 % en poids de glutardialdéhyde ce qui conduit à un rapport molaire alcool polyvinylique/glutardialdéhyde de 1 à 10. La solution à 5 % d'alcool polyvinylique et à 20 % de $MgCl_2$ conduit par suite de l'hydrolyse, à un pH de 3,3. La gélification d'une telle solution introduite dans un double vitrage se produit en 4 heures à 50°C.

## Exemple 7

En agitant constamment, on dissout 2 250 grammes d'alcool polyvinylique de masse molaire moyenne 224 000 grammes par mole et de taux d'hydrolyse de 100 moles pour-cent dans 20 000 grammes d'eau à une température de 98°C. On ajoute à cette solution 2 700 grammes de $MgCl_2.6H_2O$ et on continue d'agiter jusqu'à dissolution complète du sel. On ajoute alors à cette solution à 9 % pondéraux d'alcool polyvinylique et 5 % de $MgCl_2$, 8 grammes d'une solution à 25 % pondéraux de glutardialdéhyde. On obtient ainsi un rapport molaire alcool polyvinylique glutardialdéhyde de 1 à 2. On ajoute alors goutte à goutte à cette solution qui contient un mélange d'alcool polyvinylique et de sel, une solution aqueuse d'acide chlorhydrique à 10 % pondéraux de telle sorte qu'on obtienne un pH du mélange de 3,2. Après une homogénéisation suffisante on introduit le mélange dans l'espace d'un vitrage isolant et on laisse gélifier pendant 3 heures à 50°C.

## Exemple 8

1 250 grammes d'alcool polyvinylique de masse molaire moyenne 127 000 grammes par mole et avec un taux d'hydrolyse de 88 moles pourcent sont dissous dans 20 000 grammes d'eau à une température de 90°C en agitant constamment. On ajoute alors à la solution 3 750 grammes de $CaCl_2$ et on continue d'agiter jusqu'à dissolution complète du sel. On ajoute ensuite à cette solution à 5 % en poids d'alcool polyvinylique et 15 % de $CaCl_2$, 132 grammes de téréphtaldialdéhyde à une température de 70°C. Le rapport molaire de l'alcool polyvinylique au téréphtaldialdéhyde est ainsi de 1 à 100. Par suite de l'hydrolyse du sel le pH obtenu est de 3,8. La gélification du mélange ainsi obtenu, une fois introduit dans un double vitrage se produit en l'espace de 5 heures à 70°C.

## Revendications

1. Vitrage antifeu comportant au moins deux feuilles de verre maintenues à distance l'une de l'autre et entre lesquelles se trouve un gel aqueux dont la phase aqueuse comporte au moins un sel en solution et dont la phase solide gélifiante est constituée d'un polymère, caractérisé en ce que le polymère constitutif de la phase solide du gel est un alcool polyvinylique réticulé.

2. Procédé pour la fabrication d'un vitrage antifeu selon la revendication 1, dans lequel on remplit d'une solution aqueuse comprenant un sel dissous ainsi qu'un agent gélifiant, l'espace compris entre deux feuilles de verre et limité par un cadre intercalaire périphérique, caractérisé en ce qu'on utilise comme agent gélifiant de l'alcool polyvinylique avec une masse moléculaire moyenne de 18 000 à 224 000 grammes/mole et un dialdéhyde en guise de réticulant.

3. Procédé selon la revendication 2, caractérisé en ce qu'on utilise comme dialdéhyde destiné à provoquer la réticulation : le glutardialdéhyde, le téréphtaldialdehyde et/ou le glyoxal.

4. Procédé selon la revendication 2 ou 3, caractérisé en ce qu'on ajoute à la solution aqueuse un acide catalysant et/ou un sel acide par hydrolyse.

5. Procédé selon l'une des revendications 2 à 4, caractérisé en ce que, dans le cas d'un alcool polyvinylique d'une masse moléculaire moyenne de 18 000 g/mole, sa concentration pondérale est comprise entre 3 et 40 % et dans le cas d'un alcool polyvinylique d'une masse moléculaire moyenne de 224 000 g-/mole, sa concentration pondérale est comprise entre 1 et 10 %.

6. Procédé selon l'une ou plusieurs des revendications 2 à 5, caractérisé en ce que le glutardialdéhyde est ajouté en quantité telle que le rapport molaire de l'alcool polyvinylique au glutardialdéhyde soit compris entre 1/1 et 1/10 et de préférence de 1/5.

7. Procédé selon une ou plusieurs des revendications 2 à 5, caractérisé en ce que le teréphtaldialdéhyde est ajouté en quantité telle que le rapport molaire de l'alcool polyvinylique au teréphtaldialdéhyde soit compris entre 1/1 et 1/100 et soit choisi de préférence à environ 1/10.

8. Procédé selon l'une ou plusieurs des revendications 2 à 7, caractérisé en ce que l'on utilise comme sels solubles dans l'eau, $MgCl_2$ ou $CaCl_2$ soit seuls, soit en un mélange des deux.

## Claims

1. Fireproof glazing incorporating at least two glass sheets kept spaced from one another and between which is located an aqueous gel, whose aqueous phase comprises at least one dissolved salt and whose gelling solid phase is constituted by a polymer , characterized in that the constituent polymer of the solid phase of the gel is a crosslinked polyvinyl alcohol.

2. Process for the production of a fireproof glazing according to claim 1, in which the space between two glass sheets and defined by a peripheral intercalated frame is filled with an aqueous solution comprising a dissolved salt as well as a gelling agent, characterized in that the gelling agent is constituted by polyvinyl alcohol with a mean molecular weight of 18,000 to 224, 000 g/mole and a dialdehyde as the crosslinking agent.

3. Process according to claim 2, characterized in that the dialdehyde for causing crosslinking is constituted by glutaraldehyde, terephthalic dialdehyde and/or glyoxal.

4. Process according to claims 2 or 3, characterized in that to the aqueous solution is added a catalyzing agent and/or an acid salt by hydrolysis.

5. Process according to one of the claim 2 to 4, characterized in that, in the case of a polyvinyl alcohol with a mean molecular weight of 18, 000 g/mole, its weight concentration is between 3 and 40%, and in the case of a polyvinyl alcohol with a mean molecular weight of 224,000 g/mole, its weight concentration is between 1 and 10%.

6. Process according to one or more of the claims 2 to 5, characterized in that the glutaraldehyde is added in a quantity such that the molar ratio of polyvinyl alcohol to glutaraldehyde is between 1:1 and 1:10 and preferably is 1:5.

7. Process according to one or more of the claims 2 to 5, characterized in that the terephthalic dialdehyde is added in a quantity such that the molar ratio of the polyvinyl alcohol to the terephthalic dialdehyde is between 1:1 and 1:100 and is preferably approximately 1:10.

8. Process according to one or more of the claims 2 to 7, characterized in that the water-soluble salts are $MgCl_2$ or $CaCl_2$, either singly, or mixed together.

## Patentansprüche

1. Feuerwiderstandsfähige Verglasung aus wenigstens zwei auf Abstand zueinander gehaltenen Glasscheiben, zwischen denen eine Schicht aus einem Hydrogel angeordnet ist, dessen wässrige Phase wenigstens ein gelöstes Salz enthält und dessen gelbildende feste Phase aus einem Polymer besteht, **dadurch gekennzeichnet** , daß das die feste Phase des Gels darstellende Polymer ein vernetzter Polyvinylalkohol ist.

2. Verfahren zur Herstellung einer feuerwiderstandsfähigen Verglasung nach Anspruch 1, bei dem der von zwei Glasscheiben und einem zwischen diesen am Rand angeordneten Abstandshalterahmen gebildete Zwischenraum mit einer ein gelöstes Salz und eine gelbildende Komponente enthaltenden wässrigen Lösung gefüllt wird, dadurch gekennzeichnet, daß als gelbildende Komponente Polyvinylalkohol mit einer mittleren Molmasse von 18 000 g/mol bis 224 000 g/mol , sowie ein die Vernetzung bewirkender Dialdehyd verwendet wird.

3. Verfahren nach Anspruch 2, dadurch gekennzeichnet, daß als die Vernetzung bewirkender Dialdehyd Glutardialdehyd, Terephthaldialdehyd und/oder Glyoxal verwendet wird.

4. Verfahren nach Anspruch 2 oder 3, dadurch gekennzeichnet, daß der wässrigen Lösung eine katalysierende Säure und/oder ein hydrolytisch wirkendes saures Salz zugesetzt wird.

5. Verfahren nach einem der Ansprüche 2 bis 4, dadurch gekennzeichnet, dass die Konzentration der Lösung des Polyvinylalkohols bei einer mittleren Molmasse des Polyvinylalkohols von 18 000 g/mol 3 bis 40 Gew.-%, und bei einer mittleren Molmasse des Polyvinylalkohols von 224 000 g/mol 1 bis 10 Gew.-% beträgt.

6. Verfahren nach einem oder mehreren der Ansprüche 2 bis 5, dadurch gekennzeichnet, dass Glutardialdehyd in einer Menge zugesetzt wird, daß das Molverhältnis von Polyvinylalkohol zu Glutardialdehyd 1/1 bis 1/10, und vorzugsweise 1/5 beträgt.

7. Verfahren nach einem oder mehreren der Ansprüche 2 bis 5, dadurch gekennzeichnet, daß das Terephthaldialdehyd in einer Menge zugesetzt wird, daß das Molverhältnis von polyvinylalkohol zu Terephthaldialdehyd 1/1 bis 1/100, und vorzugsweise etwa 1/10 betraegt.

8. Verfahren nach einem oder mehreren der Ansprüche 2 bis 7, dadurch gekennzeichnet, daß als wasserlösliches Salz MgCl$_2$ und CaCl$_2$, jeweils allein oder in Mischung miteinander, verwendet wird.